# EUROPEAN PATENT APPLICATION

(11) **EP 4 478 740 A1**
(43) Date of publication of application: **18.12.2024**
(21) Application number: 24178723.3
(22) Date of filing: 29.05.2024
(51) Int. Cl.: H04R 5/02, B60N 2/879, B60R 11/02, H04R 5/04

(54) **AUDIO SYSTEM ARRANGED IN A LISTENING ENVIRONMENT IN A VEHICLE AND HEADREST FOR A VEHICLE**

(30) Priority: 16.06.2023 DE 102023115842
(71) Applicant: Harman Becker Automotive Systems GmbH, 76307 Karlsbad (DE)
(72) Inventor: BRACHT, Daniel, 76139 Karlsruhe (DE)
(74) Representative: Westphal, Mussgnug & Partner, Patentanwälte mbB

(57) **Abstract**

An audio system arranged in a listening environment in a vehicle (10) comprises an audio unit (50) configured to output audio signals, a first loudspeaker (402a) arranged in a first headrest (202) of the vehicle (10), a second loudspeaker (402b) arranged in the first headrest (202), a third loudspeaker (404a) arranged in the first headrest (202), and a fourth loudspeaker (404b) arranged in the first headrest (202), wherein each of the first, second, third, and fourth loudspeaker (402a, 402b, 404a, 404b) receives the audio signals from the audio unit (50) and is configured to reproduce the audio signals, the first loudspeaker (402a) is arranged in a position that, when a passenger (30) is seated in front of the headrest (202), is located towards a right side of the passenger's head, and above the passenger's right ear, the second loudspeaker (402b) is arranged in a position that, when a passenger (30) is seated in front of the headrest (202), is located towards a left side of the passenger's head, and above the passenger's left ear, the third loudspeaker (404a) is arranged in a position that, when a passenger (30) is seated in front of the headrest (202), is located towards a right side of the passenger's head, and below the passenger's right ear, and the fourth loudspeaker (404b) is arranged in a position that, when a passenger (30) is seated in front of the headrest (202), is located towards a left side of the passenger's head, and below the passenger's left ear.

## Description

### TECHNICAL FIELD

The disclosure relates to an audio system arranged in a listening environment, in particular in a listening environment in a vehicle, and to a headrest for a vehicle.

### BACKGROUND

Integration of speakers in a listening environment, especially a listening environment in a vehicle, may be challenging. When integrating a speaker into a vehicle, many different aspects and constraints have to be considered. One important aspect to be considered is that each passenger of the vehicle should have a satisfying listening experience. Providing a satisfying listening experience for each passenger of a vehicle is particularly difficult when a 3D surround sound experience is to be provided for the passengers.

There is a need for an audio system arranged in a listening environment in a vehicle that provides a satisfying listening experience for all occupants that are present in the listening environment.

### SUMMARY

An audio system arranged in a listening environment in a vehicle includes an audio unit configured to output audio signals, a first loudspeaker arranged in a first headrest of the vehicle, a second loudspeaker arranged in the first headrest, a third loudspeaker arranged in the first headrest, and a fourth loudspeaker arranged in the first headrest, wherein each of the first, second, third, and fourth loudspeaker receives the audio signals from the audio unit and is configured to reproduce the audio signals, the first loudspeaker is arranged in a position that, when a passenger is seated in front of the headrest, is located towards a right side of the passenger's head, and above the passenger's right ear, the second loudspeaker is arranged in a position that, when a passenger is seated in front of the headrest, is located towards a left side of the passenger's head, and above the passenger's left ear, the third loudspeaker is arranged in a position that, when a passenger is seated in front of the headrest, is located towards a right side of the passenger's head, and below the passenger's right ear, and the fourth loudspeaker is arranged in a position that, when a passenger is seated in front of the headrest, is located towards a left side of the passenger's head, and below the passenger's left ear.

A head rest for a vehicle seat includes a first loudspeaker, a second loudspeaker, a third loudspeaker, and a fourth loudspeaker, wherein each of the first, second, third, and fourth loudspeaker is configured to receive audio signals from an audio unit of the vehicle, the first loudspeaker is arranged in a position that, when a passenger is seated in front of the headrest, is located towards a right side of the passenger's head, and above the passenger's right ear, the second loudspeaker is arranged in a position that, when a passenger is seated in front of the headrest, is located towards a left side of the passenger's head, and above the passenger's left ear, the third loudspeaker is arranged in a position that, when a passenger is seated in front of the headrest, is located towards a right side of the passenger's head, and below the passenger's right ear, and the fourth loudspeaker is arranged in a position that, when a passenger is seated in front of the headrest, is located towards a left side of the passenger's head, and below the passenger's left ear.

Other systems, features and advantages of the disclosure will be or will become apparent to one with skill in the art upon examination of the following detailed description and figures. It is intended that all such additional systems, methods, features and advantages included within this description, be within the scope of the invention and be protected by the following claims.

### BRIEF DESCRIPTION OF THE DRAWINGS

The method may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 schematically illustrates a top view of a vehicle disclosure.
Figure 2, including Figures 2A - 2C, schematically illustrates different views of a head rest for a vehicle.
Figure 3 schematically illustrates an audio system for a listening environment in a vehicle according to embodiments of the disclosure.

### DETAILED DESCRIPTION

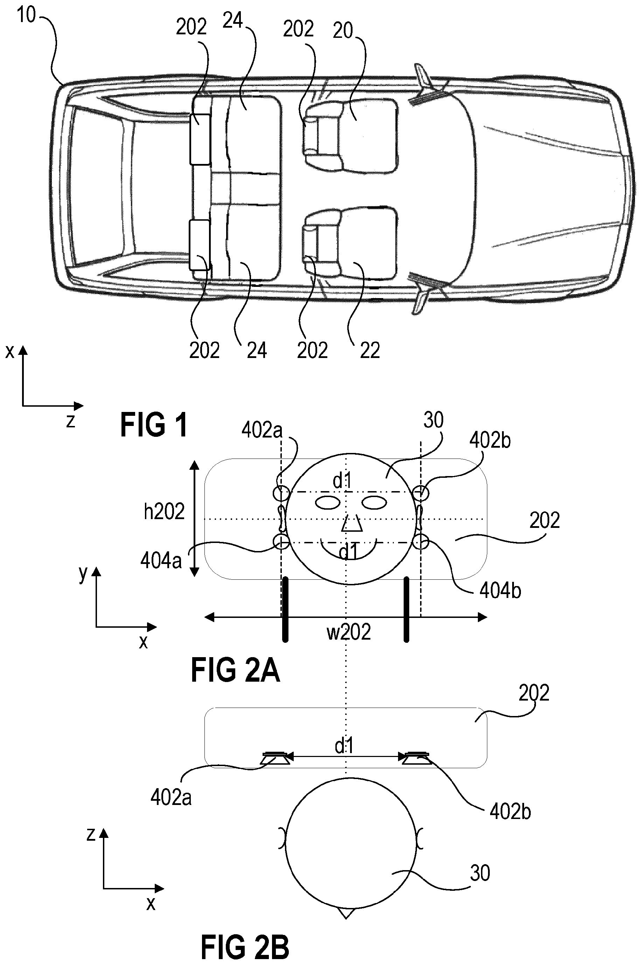

Figure 1 schematically illustrates a top view of a vehicle 10. The vehicle 10 comprises a driver's seat 20, a front passenger seat 22, and a plurality of rear passenger seats 24. A car seat generally comprises a seating area, a backrest, and a headrest 202. Every vehicle 10 today generally comprises an audio system configured to provide audio content to the passenger(s) of the vehicle 10. It is generally desirable to provide a satisfying listening experience to each passenger of a vehicle. An audio system according to embodiments of the disclosure is able to provide 3D surround sound to each passenger of a vehicle 10. In order to achieve this, a plurality of loudspeakers are arranged in a headrest 202 of the vehicle 10. A vehicle 10 may comprise a plurality of headrests 202. In particular, a vehicle 10 may comprise a headrest according to embodiments of the disclosure for every seat on which an occupant of the vehicle 10 may be seated. It is, however, also possible that not every seat of a vehicle 10 is equipped with a headrest 202 according to embodiments of the disclosure.

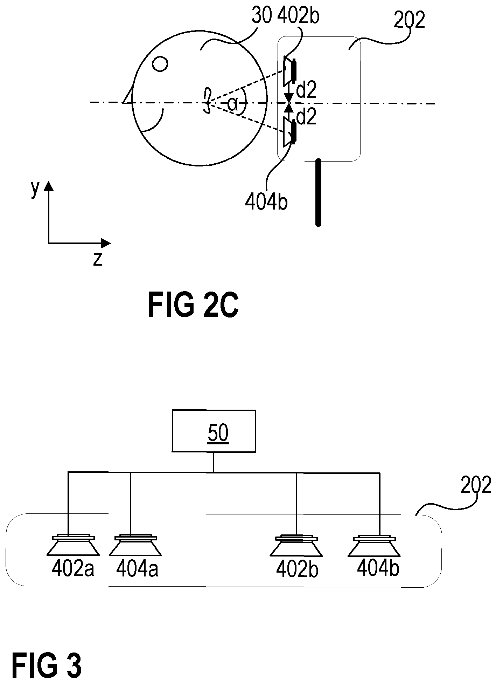

An audio system according to embodiments of the disclosure that is arranged in a listening environment in a vehicle 10 comprises an audio unit 50 configured to output audio signals, a first loudspeaker 402a arranged in a first headrest 202 of the vehicle 10, a second loudspeaker 402b arranged in the first headrest 202, a third loudspeaker 404a arranged in the first headrest 202, and a fourth loudspeaker 404b arranged in the first headrest 202. Each of the first, second, third, and fourth loudspeaker 402a, 402b, 404a, 404b receives the audio signals from the audio unit 50 and is configured to reproduce the audio signals. An audio system is very schematically illustrated in Figure 3. The first loudspeaker 402a is arranged in a position that, when a passenger 30 is seated in front of the headrest 202, is located towards a right side of the passenger's head, and above the passenger's right ear. The second loudspeaker 402b is arranged in a position that, when a passenger 30 is seated in front of the headrest 202, is located towards a left side of the passenger's head, and above the passenger's left ear. The third loudspeaker 404a is arranged in a position that, when a passenger 30 is seated in front of the headrest 202, is located towards a right side of the passenger's head, and below the passenger's right ear. The fourth loudspeaker 404b is arranged in a position that, when a passenger 30 is seated in front of the headrest 202, is located towards a left side of the passenger's head, and below the passenger's left ear. This is schematically illustrated in Figures 2A, 2B and 2C, wherein Figure 2A schematically illustrates a front view of a headrest 202, Figure 2B schematically illustrates a top view of the headrest 202, and Figure 2C schematically illustrates a side view of the headrest 202.

The first, second, third, and fourth loudspeakers 402a, 402b, 404a, 404b may be wideband loudspeakers that are configured to emit sound at frequencies of between 200Hz and 10kHz. According to some examples, the first, second, third, and fourth loudspeakers 402a, 402b, 404a, 404b may configured to emit sound at even higher frequencies, e.g. between 200Hz and 15kHz, for example. The first, second, third, and fourth loudspeakers 402a, 402b, 404a, 404b may be arranged at or towards a front side of the headrest 202. Each of the first, second, third, and fourth loudspeakers 402a, 402b, 404a, 404b may comprise a sound radiating surface. The sound radiating surfaces of each of the first, second, third, and fourth loudspeakers 402a, 402b, 404a, 404b may be directed towards the front of the vehicle 10. In other words, a main direction of sound propagation may be directed towards the front of the vehicle 10 and, therefore, towards a passenger seated in front of the respective headrest 202.

Each of the first, second, third, and fourth loudspeakers 402a, 402b, 404a, 404b may comprise a loudspeaker enclosure. The loudspeaker enclosures may be easily integrated in the headrest 202 of a car seat. Each loudspeaker enclosure may comprise an opening, wherein the respective loudspeaker is mounted in the opening such that a first side of the sound radiating surface faces the inside of the enclosure, and a second side of the sound radiating surface faces towards the outside of the enclosure and towards the front of the vehicle 10, when the headrest 202 is arranged in its intended position in the vehicle 10. The first, second, third, and fourth loudspeakers 402a, 402b, 404a, 404b may not be visible to the occupants of the vehicle 10. For example, they may be covered by fabric.

The positions of the first, second, third, and fourth loudspeakers 402a, 402b, 404a, 404b are described in more detail with respect to Figure 2 in the following. As can be seen in Figure 2A, for example, a distance between the first loudspeaker 402a and a right side of the headrest 202 may equal a distance between the second loudspeaker 402b and a left side of the headrest 202. Similarly, a distance between the third loudspeaker 404a and the right side of the headrest 202 may equal a distance between the fourth loudspeaker 404b and a left side of the headrest 202. On the other hand, a distance between the first loudspeaker 402a and an upper end of the headrest 202 may equal a distance between the second loudspeaker 402b and the upper end of the headrest 202. A distance between the third loudspeaker 404a and a lower end of the headrest 202 may equal a distance between the fourth loudspeaker 404b and the lower end of the headrest 202. That is, the first, second, third and fourth loudspeakers 402a, 402b, 404a, 404b may form the corners of a four-sided figure. The four-sided figure may be a square or a rectangle, for example. In the example illustrated in Figure 2A, the first, second, third, and fourth loudspeakers 402a, 402b, 404a, 404b form the corners of a rectangle, as indicated in dot-dashed lines.

The headrest 202 may have an essentially rectangular form, for example, having a maximum height h202 in a vertical direction y, and a maximum length w202 in a horizontal direction x. The headrest 202 may be dividable into four quadrants (indicated in dotted lines in Figure 2A), and each of the first, second, third, and fourth loudspeaker 402a, 402b, 404a, 404b may be arranged in a different one of the four quadrants, for example.

The average distance between the right ear and the left ear of a human is about 16cm. That is, a distance d1 between the first loudspeaker 402a, and the second loudspeaker 402b, and a distance d1 between the third loudspeaker 404a and the fourth loudspeaker 404b may each be between 15cm and 17cm. This may provide a satisfactory listening experience for a majority of passengers of a vehicle 10. For passengers whose ears are spaced further or less apart from each other than this average distance, the listening experience may be slightly deteriorated which, however, is generally acceptable.

In Figure 2B, only the first loudspeaker 402a and the second loudspeaker 402b are visible. This is, because the third loudspeaker 404a in this example is arranged directly below the first loudspeaker 402a in a vertical direction y (vertical direction perpendicular to a ground surface the vehicle 10 is travelling on), and the fourth loudspeaker 404b is arranged directly below the second loudspeaker 402b in the vertical direction y. That is, the first, second, third, and fourth loudspeakers 402a, 402b, 404a, 404b may all be arranged in a plane that is perpendicular with respect to a ground surface the vehicle 10 is travelling on. For the same reason, the first and third loudspeakers 402a, 404a are not visible in the side view of Figure 2C, as they are hidden by the second and fourth loudspeakers 402b, 404b, respectively.

With the audio system described herein, a very satisfactory 3D listening experience may be provided for each passenger of a vehicle 10. Each passenger is provided with audio from directly behind their ears. With one loudspeaker providing audio from above a right ear, and another loudspeaker providing audio from below the right ear, and similarly one loudspeaker providing audio from above a left ear, and another loudspeaker providing audio from below the left ear a very satisfying 3D surround experience may be achieved for every passenger separately. As all four loudspeakers 402a, 402b, 404a, 404b are arranged in direct proximity to the ears of the respective passenger, surround sound experience may be optimized for every passenger of the vehicle 10. Further, the surround experience of one passenger is not, or at least not significantly compromised by the audio signals reproduced by loudspeakers arranged in the headrest of another passenger.

As is schematically illustrated in Figure 2C, the surround sound experience may be optimized even further. According to one example, an angle α between a first straight line extending between the right ear of the passenger 30 (e.g., entrance of right ear canal) and the first loudspeaker 402a, and a second straight line extending between the right ear of the passenger 30 (e.g., entrance of right ear canal) and the third loudspeaker 404a may be between 40° and 50°. Similarly, an angle α between a third straight line extending between the left ear of the passenger 30 (e.g., entrance of left ear canal) and the second loudspeaker 402b, and a fourth straight line between the left ear of the passenger 30 (e.g., entrance of left ear canal) and the fourth loudspeaker 404b may be between 40° and 50°. According to one example, this angle α may be 45°. However, as the dimensions of the heads of different users may not be identical, there may be certain deviations. It is generally assumed, that a passenger adjusts their headrest 202 correctly. If, for example, a passenger sets their headrest 202 to be too high or too low, this may not only be critical for safety reasons but may also negatively affect the surround sound experience of the user if the loudspeakers are arranged too high or too low with respect to the user's ears.

According to one example, when the headrest 202 is adjusted correctly (generally, when adjusting the height of a headrest, the bulk of the headrest should stand directly behind the occupant's head, at ear level) and a passenger is seated in front of the headrest 202, a distance d2 between a horizontal plane and the first loudspeaker 402a equals each of a distance d2 between the horizontal plane and the third loudspeaker 404a, a distance d2 between the horizontal plane and the second loudspeaker 402b, and a distance d2 between the horizontal plane and the fourth loudspeaker 404b. The horizontal plane is essentially parallel to a ground surface the vehicle 10 is travelling on and runs through the entrances of the ear canals of the passenger. That is, the first loudspeaker 402a, the third loudspeaker 404a, and the right ear canal of a passenger seated in front of the respective headrest 202 may form the corners of an equilateral triangle. Similarly, the second loudspeaker 402b, the fourth loudspeaker 404b, and the left ear canal of the passenger seated in front of the respective headrest 202 may form the corners of an equilateral triangle.

The audio system, in addition to the loudspeakers 402a, 402b, 404a, 404b arranged in the headrest(s) 202 may include additional loudspeakers such as, overhead loudspeakers arranged in a roof liner, loudspeakers arranged in a parcel shelf, loudspeakers arranged in C or D pillar, loudspeakers arranged in a dashboard, and/or loudspeakers arranged in side panels of the vehicle 10, for example. The audio signals output by the audio unit 50 may comprise at least one of musical or verbal content received from, e.g., a radio or any other audio source available in a vehicle 10, instructions of a navigation system of the vehicle 10, and speech received via a hands-free system of the vehicle 10.

Generally it is also possible, instead of arranging physical loudspeakers in the headrest 202, to use virtual speakers instead. That is, audio signals emitted by loudspeakers at different positions within the vehicle 10 may be processed in such a way that they are perceived by an occupant as being located in the positions that have been described above. According to one example four virtual speakers, similar to the loudspeakers that have been described above, can be simulated by means of two physical loudspeakers arranged in the respective headrest. Each of the two physical loudspeakers may be arranged behind a different ear of an occupant seated in front of the headrest. The two physical loudspeakers may be arranged essentially at the same height as the ears of the occupant. This is generally sufficient to simulate by means of suitable processing methods, for each ear, a virtual loudspeaker that is perceived as being arranged above the occupant's ear, and a virtual loudspeaker that is perceived as being arranged below the occupant's ear. Virtual loudspeakers in the respective positions, however, can also be implemented in any other suitable way.

The general concept has been described with respect to a listening environment in a passenger car above. Generally, however, the vehicle 10 may be any kind of vehicle such as, e.g., a passenger car, a van, a camper van, a caravan, a truck, a bus, a tractor, an airplane, a ship, etc. It may be understood, that the illustrated systems are merely examples. While various embodiments of the invention have been described, it will be apparent to those of ordinary skill in the art that many more embodiments and implementations are possible within the scope of the invention. In particular, the skilled person will recognize the interchangeability of various features from different embodiments. Although these techniques and systems have been disclosed in the context of certain embodiments and examples, it will be understood that these techniques and systems may be extended beyond the specifically disclosed embodiments to other embodiments and/or uses and obvious modifications thereof. Accordingly, the invention is not to be restricted except in light of the attached claims and their equivalents.

The description of embodiments has been presented for purposes of illustration and description. Suitable modifications and variations to the embodiments may be performed in light of the above description or may be acquired from practicing the methods. The described arrangements are exemplary in nature, and may include additional elements and/or omit elements. As used in this application, an element recited in the singular and proceeded with the word "a" or "an" should be understood as not excluding plural of said elements, unless such exclusion is stated. Furthermore, references to "one embodiment" or "one example" of the present disclosure are not intended to be interpreted as excluding the existence of additional embodiments that also incorporate the recited features. The terms "first," "second," and "third," etc. are used merely as labels, and are not intended to impose numerical requirements or a particular positional order on their objects. The described systems are exemplary in nature, and may include additional elements and/or omit elements. The subject matter of the present disclosure includes all novel and non-obvious combinations and sub-combinations of the various systems and configurations, and other features, functions, and/or properties disclosed. The following claims particularly point out subject matter from the above disclosure that is regarded as novel and non-obvious.

## Claims

1. An audio system arranged in a listening environment in a vehicle (10) comprises:
an audio unit (50) configured to output audio signals;
a first loudspeaker (402a) arranged in a first headrest (202) of the vehicle (10),
a second loudspeaker (402b) arranged in the first headrest (202),
a third loudspeaker (404a) arranged in the first headrest (202), and
a fourth loudspeaker (404b) arranged in the first headrest (202), wherein
each of the first, second, third, and fourth loudspeaker (402a, 402b, 404a, 404b) receives the audio signals from the audio unit (50) and is configured to reproduce the audio signals,
the first loudspeaker (402a) is arranged in a position that, when a passenger (30) is seated in front of the headrest (202), is located towards a right side of the passenger's head, and above the passenger's right ear,
the second loudspeaker (402b) is arranged in a position that, when a passenger (30) is seated in front of the headrest (202), is located towards a left side of the passenger's head, and above the passenger's left ear,
the third loudspeaker (404a) is arranged in a position that, when a passenger (30) is seated in front of the headrest (202), is located towards a right side of the passenger's head, and below the passenger's right ear, and
the fourth loudspeaker (404b) is arranged in a position that, when a passenger (30) is seated in front of the headrest (202), is located towards a left side of the passenger's head, and below the passenger's left ear.

2. The audio system of claim 1, wherein the first, second, third, and fourth loudspeakers (402a, 402b, 404a, 404b) form the corners of a four-sided figure.

3. The audio system of claim 2, wherein the four-sided figure is a square or a rectangle.

4. The audio system of any of claims 1 to 3, wherein each of the first, second, third, and fourth loudspeaker (402a, 402b, 404a, 404b) is configured to emit sound at frequencies of between 200Hz and 10kHz, or between 200Hz and 15kHz.

5. The audio system of any of claims 1 to 4, wherein the audio signals output by the audio unit (50) comprise at least one of musical or verbal content received from an audio source available in the vehicle (10), instructions of a navigation system of the vehicle (10), and speech received via a hands-free system of the vehicle (10).

6. The audio system of any of the preceding claims, wherein
an angle (α) between a first straight line between the right ear of the passenger (30) and the first loudspeaker (402a), and a second straight line between the right ear of the passenger (30) and the third loudspeaker (404a) is between 40° and 50°, and
an angle (α) between a third straight line between the left ear of the passenger (30) and the second loudspeaker (402b), and a fourth straight line between the left ear of the passenger (30) and the fourth loudspeaker (404b) is between 40° and 50°.

7. The audio system of any of the preceding claims, wherein, when the headrest (202) is adjusted correctly and a passenger (30) is seated in front of the headrest (202), a distance (d1) between a horizontal plane and the first loudspeaker (402a) equals each of a distance (d1) between the horizontal plane and the third loudspeaker (404a), a distance (d1) between the horizontal plane and the second loudspeaker (402b), and a distance (d1) between the horizontal plane and the fourth loudspeaker (404b), wherein the horizontal plane is essentially parallel to a ground surface the vehicle (10) is travelling on and runs through the entrances of the ear canals of the passenger.

8. The audio system of any of the preceding claims, wherein the first headrest (202) is the headrest of a driver's seat (20).

9. The audio system of any of the preceding claims, wherein
each of the first, second, third, and fourth loudspeakers (402a, 402b, 404a, 404b) comprises a sound radiating surface, and
the first, second, third, and fourth loudspeakers (402a, 402b, 404a, 404b) are arranged in the headrest (202) such that their sound radiating surfaces are directed towards a front of the vehicle (10).

10. A headrest (202) for a vehicle (10) comprises
a first loudspeaker (402a), a second loudspeaker (402b), a third loudspeaker (404a), and a fourth loudspeaker (404b), wherein
each of the first, second, third, and fourth loudspeaker (402a, 402b, 404a, 404b) is configured to receive audio signals from an audio unit (50) of the vehicle (10),
the first loudspeaker (402a) is arranged in a position that, when a passenger (30) is seated in front of the headrest (202), is located towards a right side of the passenger's head, and above the passenger's right ear,
the second loudspeaker (402b) is arranged in a position that, when a passenger (30) is seated in front of the headrest (202), is located towards a left side of the passenger's head, and above the passenger's left ear,
the third loudspeaker (404a) is arranged in a position that, when a passenger (30) is seated in front of the headrest (202), is located towards a right side of the passenger's head, and below the passenger's right ear, and
the fourth loudspeaker (404b) is arranged in a position that, when a passenger (30) is seated in front of the headrest (202), is located towards a left side of the passenger's head, and below the passenger's left ear.
